# EUROPEAN PATENT SPECIFICATION

(11) **EP 4 236 740 B1**
(45) Date of publication and mention of the grant of the patent: **28.01.2026**
(21) Application number: 21819201.1
(22) Date of filing: 28.10.2021
(51) Int. Cl.: A47J 36/02, A47J 45/06

(54) **CONTAINER FOR COOKING FOOD WITH ANTIMICROBIAL COATING**
BEHÄLTER ZUM KOCHEN VON LEBENSMITTELN MIT ANTIMIKROBIELLER BESCHICHTUNG
RÉCIPIENT DE CUISSON D'ALIMENTS AVEC REVÊTEMENT ANTIMICROBIEN

(30) Priority: 02.11.2020 IT 202000026080
(43) Date of publication of application: 06.09.2023
(73) Proprietor: TVS S.p.A., 61033 Fermignano (PS) (IT)
(72) Inventor: BERTOZZINI, Giuseppe Alberto, 61033 Fermignano (Pesaro-Urbino) (IT)
(74) Representative: Feltrinelli, Secondo Andrea
(86) International application number: PCT/IB2021/059980
(87) International publication number: WO 2022/090994

(56) References cited:
- CN-A- 108 065 788
- CN-A- 108 067 407
- FR-A1- 2 874 492
- FR-A1- 2 937 235
- KR-A- 20140 072 613
- US-A1- 2016 309 955

## Description

### TECHNICAL FIELD OF THE INVENTION

The present invention relates to a container for cooking food, for example pans, pots, casseroles, pans, woks, grills and the like with an antimicrobial coating.

In particular, the invention relates to containers for cooking food with at least one part equipped with an antimicrobial coating, for example containers that have an internal antimicrobial non-stick coating and/or a handle equipped with an antimicrobial coating or antimicrobial paint.

The present invention also relates to the process for making the aforementioned container for cooking food.

### STATE OF THE PRIOR ART

In the sector of containers for cooking or receiving food, such as pots, pans, pans, woks, grills and the like, types of containers for cooking or receiving food with a non-stick coating are known.

Non-stick containers for cooking food are generally coated inside a layer of PTFE-based material (short form for polytetrafluoroethylene fluoropolymer) or ceramic-based (Sol-Gel process) that allows the food not to stick.

The two types of non-stick coating have excellent characteristics such as slipperiness, ease of cleaning, high chemical resistance and thermal resistance, for example 260°C continuously for the PTFE coating and about 400°C for the ceramic coating.

As regards the process for making the non-stick coating on the container, this process comprises an initial phase of preparation of the substrate with cleaning operations, for example degreasing, and sandblasting which allow a better anchoring of the coating and greater resistance to corrosion.

Subsequently, the non-stick material is applied, usually in several layers, until a thickness is reached that ensures maximum performance, not only in terms of wear and scratch resistance but also of durability.

The durability and performance of the non-stick coating essentially depend on the thickness and number of overlapping coating layers.

The non-stick coating layers, based on PTFE, can be divided into:
1) base layer or primer: fundamental paint layer for adhesion to the metal support,
2) intermediate layer or mid-coat (optional): paint layer used to reinforce the coating and with the function of interface between the primer and the finishing layer,
3) finishing layer or topcoat: layer of paint applied directly on the primer, in the case of a two-layer coating, or on the intermediate layer, in the case of a three-layer coating, which gives the coating effective non-adhesion. It is therefore the layer with the highest percentage of fluoropolymers.

These layers can be applied by spray, roller, curtain, dipping, pad printing, screen printing or other method of application, both when they are in the wet phase and when they are completely dried.

Generally, the first layer is dried for a time such as to bring it into the so-called dry-to-touch state, i.e., when no mark or imprint remains on its surface if the layer is touched with a finger, while the intermediate and the finishing can be dried or not dried; then, all the layers are baked in an oven at about 430°C for final sintering.

The so-called ceramic coating is instead based on Sol-Gel technology, and the name derives from the inorganic particles of ceramic oxides contained within. The particular technique creates a compact, smooth, absolutely non-porous and shiny coating film on the substrate (glassy appearance) which guarantees crisp cooking, ease of cleaning and a completely new experience compared to traditional PTFE-based non-stick products.

The ceramic-based non-stick coating layers can be divided into:
1) base layer or basecoat: fundamental paint layer for adhesion to the metal support,
2) finishing layer or topcoat: layer of paint applied directly to the basecoat, which gives the coating effective non-stickiness.

As the components of the layers are catalyzed, it is not possible to wait too long between the application of the base and the finish, otherwise having a failure to adhere between the two layers.

These layers can be applied by spray, roller, curtain, dipping, pad printing, screen printing or other method of application, both when they are in the wet phase and when they are partially dried.

The basecoat layer and the finish can be dried or not dried, and then all the layers are subjected to kiln baking, at temperatures generally between 200°C and 350°C.

Direct drying in air is also possible, since the products are catalyzed.

The aforementioned non-stick coatings, due to their micro-porosity, do not prevent the formation and propagation of microorganisms and therefore cannot provide such protection to the food they come into contact with.

Therefore, these non-stick coatings are not antimicrobial, meaning by the term antimicrobial the characteristic of a material that makes it resistant to the growth of microbes, including bacteria, viruses and molds.

As is known, microbes can cause infectious diseases and bacteria such as MRSA (i.e., Methicillin-Resistant Staphylococcus Aureus) and E. Coli (Escherichia coli) can survive on hard surfaces for several months, presenting a significant possibility of cross-contamination.

Microbes such as molds can extract nutrients from materials and impair their properties.

Therefore, the need arises to have containers for cooking food with non-stick coatings that offer greater protection against the formation and propagation of microorganisms.

The most common containers intended for cooking food in general, such as pans, pots and casseroles, are equipped with handles or handles that allow them to be easily gripped, even when the container is full and hot.

In particular, the pans are usually provided with a single elongated handle, which extends radially and cantilevered from the side wall of the pan. Saucepans usually have two handles or one handle and one handle.

The handles used for the cookware must be heat-insulating, to protect the end user from the risk of burns, fireproof and ergonomic to allow a firm, safe and comfortable grip while cooking.

For these reasons, the handles can be made in the following materials:
- Bakelite: thermosetting plastic material that can be painted with various bright, opaque and soft-touch colors and finishes (non-slip and comfortable); it is also possible to find inserts in thermoplastic material such as nylon and SAN (acrylonitrile-styrene copolymer),
- Stainless steel with heat-insulating silicone or silicone-free,
- Wood: it must be protected with a protective to make it fireproof and to improve its resistance to the dishwasher,
- Silicone.

The handle or handles are usually fixed to the side wall of the container for cooking food by means of a riveting, in the case of a handle fixed with aluminum or steel rivets, or by means of a welding by means of a block, that is an element welded to the wall of the kitchen utensil to which the handle is fixed by means of one or more screws that are inserted in special threaded seats of the block.

Documents CN108067407A, CN108065788A, FR2874492A1, US 2016/309955 A1, FR 2 937 235 A1 and KR20140072613A teach respective solutions according to the state of the art.

Since the handles of the containers for cooking food are in direct contact with the user's hands, nowadays there is a particular need to have containers for cooking food with handles that offer greater hygiene and greater safety against contamination by bacteria, viruses and molds, and that can inhibit the reproductive capabilities of bacteria, viruses and molds.

### OBJECTS OF THE INVENTION

An object of the present invention is to develop a container for cooking food, and the related manufacturing process, which allows to obviate the previously mentioned drawbacks and to improve the state of the art.

Another object of the present invention is to provide a container for cooking food with an antimicrobial non-stick coating.

A further object of the present invention is to provide containers for cooking food equipped with handles with antimicrobial coating or antimicrobial paint.

According to an aspect of the invention, a container for cooking food according to claim 1 is provided.

According to another aspect of the invention, a container for cooking food according to claim 2 is provided.

According to yet another aspect of the invention, a process is provided for the construction of a container for cooking food according to claim 9.

According to another aspect of the present invention, the antimicrobial non-stick coating is based on polymers of the PTFE (polytetrafluoroethylene), FEP (fluorinated ethylene propylene), PFA (perfluoro alkoxy), PES (polyether sulfone), PPS (polyphenylene sulfide), PEEK (polyether ether ketone) type, or a mixture of these polymers, or is Sol-Gel based, i.e. a ceramic material, and includes antimicrobial additives such as silver ions and/or elements such as zinc and/or copper.

Thanks to these additives, surfaces are protected from a wide range of microbes including bacteria, molds and viruses.

In particular, silver ion antimicrobial technology has proven to be effective against many microbes including Staphylococcus aureus, E. Coli, Salmonella, Listeria, Legionella, Campylobacter, Pseudomonas, Shigella, H1N1 virus, Aspergillus Niger.

Thanks to its natural antimicrobial properties, silver has been used, since ancient times, for a wide range of applications, such as disinfecting water and preserving food.

It is an effective solution for all applications that require greater hygiene, since the active ingredient contained in the products, that is, the silver ions, is able to inhibit the reproductive capacity of most known bacteria.

According to yet another aspect of the present invention, the non-stick coating is always based on polymers such as of the type PTFE (polytetrafluoroethylene), FEP (fluorinated ethylene propylene), PFA (perfluoro alkoxy), PES (polyether sulfone), PPS (polyphenylene sulfide), PEEK (polyether ether ketone), or a mixture of these polymers, or is based on Sol-Gel (ceramic material) and includes Aloe powder and/or Aloe juice and/or Aloe gel and/or one or more Aloe-based compound.

Aloe is known for its anti-inflammatory, moisturizing properties and for its antibacterial and antiviral action.

Some studies have shown that Aloe extracts are able to act against certain types of bacteria, viruses or fungi including Escherichia coli and Candida albicans.

The use of this plant has a long tradition in different parts of the world given the many benefits that have been found over the years, now also confirmed by some scientific research.

In an embodiment of the invention the handles of the container for cooking food are equipped with antimicrobial coatings and/or antimicrobial paints thanks to the use of additives such as silver ions and/or elements such as zinc and/or copper or with powder, juice or Aloe gel.

The dependent claims refer to preferred and advantageous forms of the invention.

### BRIEF DESCRIPTION OF THE DRAWINGS

Other features and advantages of the invention will be more evident from the description of an example of construction of a unit, illustrated as an indication in the accompanying drawings in which:
- Figure 1 is a top view of a container for cooking or receiving food according to the present invention,
- Figure 2 is a side view of the container of Figure 1,
- Figure 3 is a detail of a cross section of the container of Figures 1 and 2.

In the accompanying drawings, identical parts or components are indicated by the same reference numbers.

### EXAMPLES OF EMBODIMENT OF THE INVENTION

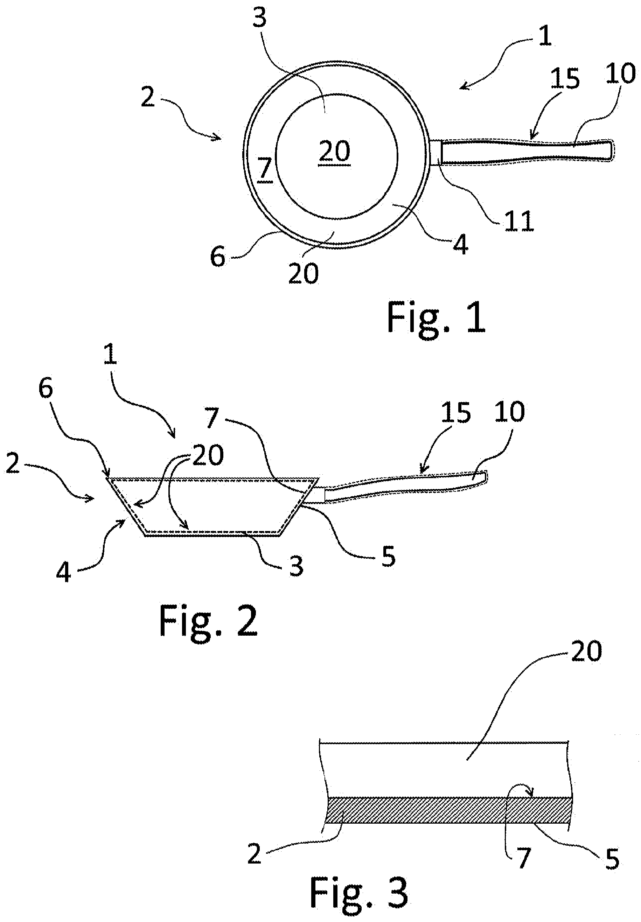

With reference to figure 1, the number 1 generally indicates a container for cooking food according to the present invention.

In particular, figures 1 and 2 schematically illustrate a container for cooking or receiving food which is made, by way of non-limiting example only, in the form of a pan.

It should be noted that the container 1 can be of any other type, for example it can consist of a pan, a saucepan, a grill pan, or other, without any limitation.

The container 1 comprises, in a known way, a substantially bowl-shaped or substantially flat body 2, comprising a bottom 3 and a side wall 4. In detail, the body 2 defines an outer surface 5, an upper edge 6 and an inner surface 7.

The inner surface 7 comprises a non-stick coating 20 which is also capable of being antimicrobial.

The non-stick coating 20 can have an overall thickness of at least 10 µm and, for example, a thickness of between 10 µm and 80 µm.

The non-stick coating 20 comprises one or more layers, it can be continuous or discontinuous, it can be without decoration or with one or more decorations, and/or it can comprise decorations that can be continuous or discontinuous, for example presenting a stone-effect dotting.

The body 2 and its upper edge 6 can have any shape, for example rectangular, oval, circular, or other.

The container 1 can comprise a grip or handle 10, made of any type of material and comprising an antimicrobial coating and/or an antimicrobial paint 15.

The grip or handle 10 has an end 11 for fixing to the body 2 of the container 1; the fixing of the grip or handle 10 to the body 2 can be carried out by welding, for example by means of a block, or by riveting, or with other equivalent connection techniques.

The body 2 of the container 1 is made for example of metallic material, such as aluminum alloy, stainless steel, or other metal or other metal alloy; the body 2 can however be made of any other material with physical and mechanical characteristics suitable for allowing food to be cooked, such as porcelain, wood, plastic, terracotta, composite materials, etc.

The body 2 is formed, according to methods which are not the subject of the present invention, assuming the desired final shape; subsequently, the body 2 is surface treated by means of a polishing and/or brushing and/or sandblasting and/or anodizing and/or painting and/or sanding process, to allow better adhesion of the non-stick coating 20 which will subsequently be applied to the aforementioned body 2.

On the outer surface 5 of the container 1, at least one layer of protective paint can be applied which can be a Sol-Gel ceramic base, a PTFE (polytetrafluoroethylene) base, or a lacquer or a porcelain enamel, or still another type of paint suitable to withstand the temperatures of the heat sources for cooking food.

The Applicant has developed an innovative non-stick coating 20 capable of being antimicrobial and which can be applied by screen printing, pad printing, spraying, rolling, brushing, curtain coating by a curtain coating machine or by another equivalent application method.

The non-stick coating 20 is based on polymers such as: PTFE (polytetrafluoroethylene), FEP (fluorinated ethylene propylene), PFA (perfluoro alkoxy), PES (polyether sulfone), PPS (polyphenylene sulfide), PEEK (polyether ketone), or a mixture of the above polymers, or is based on Sol-Gel, that is a ceramic material.

According to the present invention, the non-stick coating 20 comprises antimicrobial additives such as silver ions and/or elements such as zinc and/or copper and/or Aloe powder and/or Aloe juice and/or Aloe gel and/or one or more Aloe-based compound.

The non-stick coating can comprise one or more layers which are subsequently baked at a temperature between 380°C and 450°C for fluoropolymer based non-stick products, for example PTFE or polytetrafluoroethylene, and between 150°C - 350°C for non-stick products Sol-Gel based, for example a ceramic material.

The aforementioned non-stick coating 20 has antimicrobial characteristics, is durable over time, resistant to washing in the dishwasher and easy to make.

The antimicrobial coating or antimicrobial paint 15 of the grip or handle 10 can be water-based, or solvent-based, and includes antimicrobial additives such as silver ions and/or elements such as zinc and/or copper and/or Aloe powder and/or juice of Aloe and/or Aloe gel and/or any Aloe-based compound.

Thanks to these substances, which as mentioned have antimicrobial properties, the formation and propagation of microorganisms in the cooking area of food and in the contact area with the user's hands is inhibited.

The process for making the container 1 for cooking food described above is illustrated below, process which is also the subject of the present invention.

The process initially involves a step of making the body 2 in metal material, for example aluminum alloy, stainless steel, or other metal or other metal alloy and/or in any other material with chemical-physical and mechanical characteristics to allow cooking of the foods, for example materials such as porcelain, wood, plastic, terracotta, composite materials, etc.

Subsequently, one proceeds with the phase of forming the body 2, so that it assumes the final desired shape.

Subsequently, a step is envisaged of treating the surface of the body 2 by means of a polishing and/or brushing and/or sandblasting and/or anodizing and/or painting and/or grinding process, to allow better adhesion of the non-stick coating 20 on said body 2.

The non-stick coating 20 is prepared by adding antimicrobial additives such as silver ions and/or elements such as zinc and/or copper and/or Aloe powder and/or Aloe juice and/or Aloe gel and/or any Aloe-based compound, or a mixture of the above additives; the non-stick coating 20 is therefore antimicrobial thanks to the addition of these additives.

The non-stick coating 20 is then applied to the inner surface 7 of the container 1 by means of one or more of the following methods: spraying, rolling, curtain coating by means of a curtain coating machine, by means of screen printing, pad printing, brushing or by another equivalent application method.

As a consequence of the above application step, the inner surface 7 of the container 1 is made more hygienic and protected from a wide range of microbes including bacteria, molds and viruses.

In another version of the present invention, the process comprises, in addition to the steps described above, or even only some of them, at least one step of fixing handles, handles 10 and the like to the body 2, by welding, for example by means of a block, or by riveting, or with other equivalent connection techniques.

A coating or paint 15 is prepared for the grip or handle 10 by adding, to an aqueous base, or a solvent base, antimicrobial additives such as silver ions and/or elements such as zinc and/or copper and/or Aloe powder and/or juice Aloe and/or Aloe gel and/or any Aloe-based compound, or a mixture of the aforementioned additives; the coating or paint 15 is therefore antimicrobial thanks to the addition of these additives.

Then, it is possible to proceed with the application of an antimicrobial coating or an antimicrobial paint 15 to the grip or handle 10 by one or more of the following methods: screen printing, pad printing, spraying, rolling, brushing, by immersion or by another equivalent application method.

According to yet another version of the present invention, the aforementioned step of applying an antimicrobial coating or an antimicrobial paint 15 to the grip or handle 10 can precede the step of fixing it to the body 2.

It has thus been seen how the invention fully achieves the proposed purposes.

The container according to the present invention, having the non-stick coating 20, and if desired the grip or handle 10 which includes an antimicrobial coating or an antimicrobial paint 15, is able to provide greater hygiene and is able to inhibit reproduction. bacteria, viruses and molds, in particular in the cooking area of food and in the contact area with the user's hands.

The application of the aforementioned coatings and/or paints is simple and relatively economical.

The invention thus conceived is susceptible of numerous modifications and variations, insofar as they fall within the scope of the protection of the following claims.

## Claims

1. Container (1) for cooking food comprising a body (2), a bottom (3), a side wall (4), said body (2) having an outer surface (5), intended to come into contact with a heat source, and an inner surface (7), intended to come into contact with food, said inner surface (7) comprising a non-stick coating (20), said non-stick coating (20) having an overall thickness of at least 10 µm, for example a thickness between 10 µm and 80 µm, and being sintered by means of baking, at a temperature between 380°C and 450°C for non-stick based fluoropolymers, for example PTFE or polytetrafluoroethylene, and between 150°C and 350°C for non-stick based Sol-Gel, for example a ceramic material, **characterized in that** said coating (20) comprises antimicrobial additives, wherein said antimicrobial additives of said coating (20) comprise Aloe powder and/or Aloe juice and/or Aloe gel and/or one or more Aloe-based compounds.

2. Container (1) for cooking food comprising a body (2), a bottom (3), a side wall (4), said body (2) having an outer surface (5), intended to come into contact with a heat source, and an inner surface (7), intended to come into contact with food, said inner surface (7) comprising a non-stick coating (20), wherein said non-stick coating (20) comprises Sol-Gel, having an overall thickness of at least 10 µm, for example a thickness between 10 µm and 80 µm, and is sintered by means of baking, at a temperature between 150°C and 350°C, for example a ceramic material, **characterized in that** said coating (20) also includes antimicrobial additives.

3. Container according to claim 1, wherein said non-stick coating (20) comprises polymers such as PTFE (polytetrafluoroethylene), FEP (fluorinated propylene ethylene), PFA (perfluoro alkoxy alkanes), PES (polyether sulfone), PPS (polyphenylene sulfide), PEEK (polyether ether ketone), or a mixture of said polymers.

4. Container according to one of the preceding claims, wherein said non-stick coating (20) comprises one or more layers, one or more decorations which may be continuous or discontinuous, for example having a stone-effect dotting.

5. Container according to one of the preceding claims, wherein said non-stick coating (20) is applied to said inner surface (7) by one or more of the following methods: spraying, rolling, curtain coating by curtain coating machine, by means of screen printing, pad printing, brushing or by another equivalent application method.

6. Container according to one of the preceding claims, comprising at least one grip or handle (10) fixed to said side wall (4), said grip or handle (10) being made of any type of material and comprising an antimicrobial coating and/or an antimicrobial paint (15).

7. Container according to the preceding claim, wherein said antimicrobial coating and/or antimicrobial paint (15) comprises an aqueous base, or a solvent base, and antimicrobial additives such as silver ions and/or elements such as zinc and/or copper and/or Aloe powder and/or Aloe juice and/or Aloe gel and/or any Aloe-based compound.

8. Container according to claim 6 or 7, wherein said antimicrobial coating and/or antimicrobial paint (15) is applied on said grip or handle (10) by one or more of the following methods: screen printing, pad printing, spraying, rolling, brushing, by immersion or by another equivalent application method.

9. Process for the production of a container (1) for cooking food according to any one of the preceding claims, comprising the steps of:
making a body (2) of metallic material, such as aluminum alloy, stainless steel, or other metal or other metallic alloy and/or any other material with chemical-physical and mechanical features to allow cooking food, for example materials such as porcelain, wood, plastic, terracotta, composite materials, etc.;
forming said body (2), so as to assume the desired final conformation, said body (7) comprising an inner surface intended to come into contact with food;
surface treating said body (2) by means of a polishing and/or brushing and/or sandblasting and/or anodizing and/or painting and/or sanding process;
applying, on said inner surface (7), a non-stick coating (20) having an overall thickness of at least 10 µm, for example a thickness between 10 µm and 80 µm;
**characterized in that** said non-stick coating (20) comprises antimicrobial additives, added during the preparation step of said non-stick coating (20) rendering said inner surface (7) more hygienic and protecting it from a wide range of microbes including bacteria, molds and viruses.

10. Process according to the preceding claim, wherein said step of preparing said non-stick coating (20) comprises adding antimicrobial additives such as silver ions, elements such as zinc and/or copper and/or Aloe powder and/or Aloe juice and/or Aloe gel and/or any Aloe-based compound, or a mixture of said additives.

11. Process according to claim 9 or 10, wherein said step of applying said non-stick coating (20) comprises one or more of the following methods: spraying, rolling, curtain coating by a curtain coating machine, screen printing, pad printing, brushing or other equivalent application method.

12. Process according to one of claims 9 to 11, comprising at least one step of fixing grips or handles (10) and the like by welding, for example by means of a block, or by riveting, or by other equivalent connecting techniques.

13. Process according to the preceding claim, comprising a step of preparing a coating or a paint (15) for said grips or handles (10), adding to an aqueous base, or to a solvent base, antimicrobial additives such as silver ions, elements such as zinc and/or copper and/or Aloe powder and/or Aloe juice and/or Aloe gel and/or any Aloe compound, or a mixture of said additives.

14. Process according to the preceding claim, comprising a step of applying an antimicrobial coating or an antimicrobial paint (15) to the grip or handle (10) by one or more of the following methods: screen printing, pad printing, spraying, rolling, brushing, by immersion or by another equivalent application method.

## Patentansprüche

1. Behälter (1) zum Kochen von Lebensmitteln, umfassend einen Körper (2), einen Boden (3), eine Seitenwand (4), wobei der besagte Körper (2) eine äußere Oberfläche (5), die dazu bestimmt ist, mit einer Wärmequelle in Berührung zu kommen, und eine innere Oberfläche (7), die dazu bestimmt ist, mit Lebensmitteln in Berührung zu kommen, aufweist, wobei die besagte innere Oberfläche (7) eine Antihaftbeschichtung (20) umfasst, wobei die besagte Antihaftbeschichtung (20) eine Gesamtdicke von mindestens 10 µm, zum Beispiel eine Dicke zwischen 10 µm und 80 µm, aufweist und durch Brennen, bei einer Temperatur zwischen 380 °C und 450 °C für Fluorpolymere auf Antihaftbasis, zum Beispiel PTFE oder Polytetrafluorethylen, und zwischen 150 °C und 350 °C für Sol-Gel auf Antihaftbasis, zum Beispiel ein keramisches Material, gesintert wird, **dadurch gekennzeichnet, dass** die besagte Beschichtung (20) antimikrobielle Additive umfasst, worin die besagten antimikrobiellen Additive der besagten Beschichtung (20) Aloe-Pulver und/oder Aloe-Saft und/oder Aloe-Gel und/oder eine oder mehrere Verbindungen auf Aloe-Basis umfassen.

2. Behälter (1) zum Kochen von Lebensmitteln, umfassend einen Körper (2), einen Boden (3), eine Seitenwand (4), wobei der besagte Körper (2) eine äußere Oberfläche (5), die dazu bestimmt ist, mit einer Wärmequelle in Berührung zu kommen, und eine innere Oberfläche (7), die dazu bestimmt ist, mit Lebensmitteln in Berührung zu kommen, aufweist, wobei die besagte Oberfläche (7) eine Antihaftbeschichtung (20) umfasst, worin die besagte Antihaftbeschichtung (20) Sol-Gel umfasst, das eine Gesamtdicke von mindestens 10 µm, zum Beispiel eine Dicke zwischen 10 µm und 80 µm, aufweist und durch Brennen, bei einer Temperatur zwischen 150 °C und 350 °C, zum Beispiel ein keramisches Material, gesintert ist, **dadurch gekennzeichnet, dass** die besagte Beschichtung (20) auch antimikrobielle Additive enthält.

3. Behälter nach Anspruch 1, worin die besagte Antihaftbeschichtung (20) Polymere wie PTFE (Polytetrafluorethylen), FEP (fluoriertes Propylen-Ethylen), PFA (Perfluoralkoxy-Alkane), PES (Polyethersulfon), PPS (Polyphenylensulfid), PEEK (Polyetheretherketon) oder eine Mischung der besagten Polymere umfasst.

4. Behälter nach irgendeinem der vorangegangenen Ansprüche, worin die besagte Antihaftbeschichtung (20) eine oder mehrere Schichten umfasst, wobei eine oder mehrere Dekorationen kontinuierlich oder diskontinuierlich sein können, zum Beispiel mit einer Stein-Effekt-Punktierung.

5. Behälter nach irgendeinem der vorangegangenen Ansprüche, worin die besagte Antihaftbeschichtung (20) auf die besagte innere Oberfläche (7) durch eine oder mehrere der folgenden Methoden aufgebracht wird: Sprühen, Walzen, Vorhangbeschichtung durch eine Vorhangbeschichtungsmaschine, mittels Siebdruck, Tampondruck, Bürsten oder durch eine andere gleichwertige Aufbringungsmethode.

6. Behälter nach einem der vorangegangenen Ansprüche, umfassend mindestens einen Griff oder Handgriff (10), der an der besagten Seitenwand (4) befestigt ist, wobei der besagte Griff oder Handgriff (10) aus irgendeiner Art von Material hergestellt ist und eine antimikrobielle Beschichtung und/oder eine antimikrobielle Farbe (15) umfasst.

7. Behälter nach dem vorangegangenen Anspruch, worin die besagte antimikrobielle Beschichtung und/oder antimikrobielle Farbe (15) eine wässrige Basis oder eine Lösungsmittelbasis und antimikrobielle Additive wie Silberionen und/oder Elemente wie Zink und/oder Kupfer und/oder Aloe-Pulver und/oder Aloe-Saft und/oder Aloe-Gel und/oder irgendeine Verbindung auf Aloe-Basis umfasst.

8. Behälter nach Anspruch 6 oder 7, worin die besagte antimikrobielle Beschichtung und/oder antimikrobielle Farbe (15) auf den besagten Griff oder Handgriff (10) durch eine oder mehrere der folgenden Methoden aufgebracht wird: Siebdruck, Tampondruck, Sprühen, Walzen, Bürsten, durch Eintauchen oder durch eine andere gleichwertige Aufbringungsmethode.

9. Verfahren zur Herstellung eines Behälters (1) zum Kochen von Lebensmitteln nach irgendeinem der vorangegangenen Ansprüche, umfassend die Schritte des:
Herstellens eines Körpers (2) aus metallischem Material, wie einer Aluminiumlegierung, rostfreiem Stahl oder einem anderen Metall oder einer anderen Metalllegierung und/oder einem anderen Material mit chemischen-physikalischen und mechanischen Eigenschaften, die das Kochen von Lebensmitteln ermöglichen, zum Beispiel Materialien wie Porzellan, Holz, Kunststoff, Terrakotta, Verbundwerkstoffe usw.;
Formens des besagten Körpers (2), damit er die gewünschte Endform annimmt, wobei der besagte Körper (7) eine innere Oberfläche umfasst, die dazu bestimmt ist, mit Lebensmitteln in Berührung zu kommen;
Oberflächenbehandelns des besagten Körpers (2) mittels eines Polier- und/oder Bürst- und/oder Sandstrahl- und/oder Eloxier- und/oder Lackier- und/oder Schleifverfahrens;
Aufbringens, auf die besagte innere Oberfläche (7), einer Antihaftbeschichtung (20), die eine Gesamtdicke von mindestens 10 µm, zum Beispiel eine Dicke zwischen 10 µm und 80 µm, aufweist;
**dadurch gekennzeichnet, dass** die besagte Antihaftbeschichtung (20) antimikrobielle Additive umfasst, die während des Vorbereitungsschritts der besagten Antihaftbeschichtung (20) zugesetzt werden, um die besagte innere Oberfläche (7) hygienischer zu machen und sie vor einem breiten Spektrum von Mikroben, einschließlich Bakterien, Schimmelpilzen und Viren, zu schützen.

10. Verfahren nach dem vorangegangenen Anspruch, worin der besagte Schritt des Vorbereitens der besagten Antihaftbeschichtung (20) das Zusetzen von antimikrobiellen Additiven wie Silberionen, Elementen wie Zink und/oder Kupfer und/oder Aloe-Pulver und/oder Aloe-Saft und/oder Aloe-Gel und/oder irgendeine Verbindung auf Aloe-Basis oder eine Mischung der besagten Additive umfasst.

11. Verfahren nach Anspruch 9 oder 10, worin der besagte Schritt des Aufbringens der besagten Antihaftbeschichtung (20) eine oder mehrere der folgenden Methoden umfasst: Sprühen, Walzen, Vorhangbeschichtung durch eine Vorhangbeschichtungsmaschine, Siebdruck, Tampondruck, Bürsten oder eine andere gleichwertige Aufbringungsmethode.

12. Verfahren nach einem der Ansprüche 9 bis 11, umfassend mindestens einen Schritt des Befestigens von Griffen oder Handgriffen (10) und dergleichen durch Schweißung, zum Beispiel mittels eines Blocks, oder durch Nietung, oder durch andere gleichwertige Verbindungstechniken.

13. Verfahren nach dem vorangegangenen Anspruch, umfassend einen Schritt des Vorbereitens einer Beschichtung oder einer Farbe (15) für die besagten Griffe oder Handgriffe (10), wobei einer wässrigen Basis oder einer Lösungsmittelbasis antimikrobielle Additive wie Silberionen, Elemente wie Zink und/oder Kupfer und/oder Aloe-Pulver und/oder Aloe-Saft und/oder Aloe-Gel und/oder irgendeine Aloe-Verbindung oder eine Mischung der besagten Additive zugesetzt werden.

14. Verfahren nach dem vorangegangenen Anspruch, umfassend einen Schritt des Aufbringens einer antimikrobiellen Beschichtung und/oder einer antimikrobiellen Farbe (15) auf den Griff oder Handgriff (10) durch eine oder mehrere der folgenden Methoden: Siebdruck, Tampondruck, Sprühen, Walzen, Bürsten, durch Eintauchen oder durch eine andere gleichwertige Aufbringungsmethode.

## Revendications

1. Récipient (1) pour la cuisson de denrées alimentaires comprenant un corps (2), un fond (3), une paroi latérale (4), ledit corps (2) ayant une surface extérieure (5) destinée à entrer en contact avec une source de chaleur, et une surface intérieure (7) destinée à entrer en contact avec des denrées alimentaires, ladite surface intérieure (7) comprenant un revêtement antiadhésif (20), ledit revêtement antiadhésif (20) ayant une épaisseur totale d'au moins 10 µm, par exemple une épaisseur comprise entre 10 µm et 80 µm, et étant frittée par cuisson, à une température comprise entre 380°C et 450°C pour les fluoropolymères antiadhésifs, par exemple le PTFE ou le polytétrafluoroéthylène, et entre 150°C et 350°C pour le Sol-Gel antiadhésif, par exemple un matériau céramique, **caractérisé en ce que** ledit revêtement (20) comprend des additifs antimicrobiens, dans lequel lesdits additifs antimicrobiens dudit revêtement (20) comprennent de la poudre d'aloès et/ou du jus d'aloès et/ou du gel d'aloès et/ou un ou plusieurs composés à base d'aloès.

2. Récipient (1) pour la cuisson de denrées alimentaires comprenant un corps (2), un fond (3), une paroi latérale (4), ledit corps (2) ayant une surface extérieure (5) destinée à entrer en contact avec une source de chaleur, et une surface intérieure (7) destinée à entrer en contact avec des denrées alimentaires, ladite surface intérieure (7) comprenant un revêtement antiadhésif (20), dans lequel ledit revêtement antiadhésif (20) comprend du Sol-Gel, ayant une épaisseur totale d'au moins 10 µm, par exemple une épaisseur comprise entre 10 µm et 80 µm, et est fritté par cuisson, à une température comprise entre 150°C et 350°C, par exemple un matériau céramique, **caractérisé en ce que** ledit revêtement (20) comprend également des additifs antimicrobiens.

3. Récipient selon la revendication 1, dans lequel ledit revêtement antiadhésif (20) comprend des polymères tels que le PTFE (polytétrafluoroéthylène), le FEP (propylène éthylène fluoré), le PFA (alcanes alcoxy perfluorés), le PES (polyéther sulfone), le PPS (sulfure de polyphénylène), le PEEK (polyéther éther cétone), ou un mélange desdits polymères.

4. Récipient selon l'une des revendications précédentes, dans lequel ledit revêtement antiadhésif (20) comprend une ou plusieurs couches, une ou plusieurs décorations qui peuvent être continues ou discontinues, par exemple avec un pointillé à effet pierre.

5. Récipient selon l'une des revendications précédentes, dans lequel ledit revêtement antiadhésif (20) est appliqué sur ladite surface intérieure (7) par un ou plusieurs des procédés suivants: pulvérisation, laminage, revêtement au rideau par machine de revêtement au rideau, au moyen de la sérigraphie, de la tampographie, du brossage ou par un autre procédé d'application équivalent.

6. Récipient selon l'une des revendications précédentes, comprenant au moins un manche ou une poignée (10) fixé(e) à ladite paroi latérale (4), ledit manche ou ladite poignée (10) étant fait(e) de tout type de matériau et comprenant un revêtement antimicrobien et/ou une peinture antimicrobienne (15).

7. Récipient selon la revendication précédente, dans lequel ledit revêtement antimicrobien et/ou ladite peinture antimicrobienne (15) comprend une base aqueuse, ou une base de solvant, et des additifs antimicrobiens tels que des ions d'argent et/ou des éléments tels que le zinc et/ou le cuivre et/ou la poudre d'aloès et/ou le jus d'aloès et/ou le gel d'aloès et/ou tout composé à base d'aloès.

8. Récipient selon la revendication 6 ou **7,** dans lequel ledit revêtement antimicrobien et/ou ladite peinture antimicrobienne (15) est appliqué(e) sur ledit manche ou ladite poignée (10) par un ou plusieurs des procédés suivants : sérigraphie, tampographie, pulvérisation, roulage, brossage, par immersion ou par un autre procédé d'application équivalent.

9. Procédé de production d'un récipient (1) pour la cuisson de denrées alimentaires selon l'une quelconque des revendications précédentes, comprenant les étapes suivantes:
fabrication d'un corps (2) en matériau métallique, tel qu'un alliage d'aluminium, de l'acier inoxydable ou un autre métal ou un autre alliage métallique et/ou tout autre matériau présentant des caractéristiques physico-chimiques et mécaniques pour permettre la cuisson des denrées alimentaires, par exemple des matériaux tels que la porcelaine, le bois, le plastique, la terre cuite, les matériaux composites, etc.;
formation dudit corps (2), de manière à prendre la conformation finale souhaitée, ledit corps (7) comprenant une surface intérieure destinée à entrer en contact avec des denrées alimentaires;
traitement de surface dudit corps (2) au moyen d'un procédé de polissage et/ou de brossage et/ou de sablage et/ou d'anodisation et/ou de peinture et/ou de ponçage;
application, sur ladite surface intérieure (7), d'un revêtement antiadhésif (20) d'une épaisseur totale d'au moins 10 µm, par exemple une épaisseur comprise entre 10 µm et 80 µm;
**caractérisé en ce que** ledit revêtement antiadhésif (20) comprend des additifs antimicrobiens, ajoutés lors de l'étape de préparation dudit revêtement antiadhésif (20), rendant ladite surface intérieure (7) plus hygiénique et la protégeant d'un large éventail de microbes, y compris les bactéries, les moisissures et les virus.

10. Procédé selon la revendication précédente, dans lequel ladite étape de préparation dudit revêtement antiadhésif (20) comprend l'ajout d'additifs antimicrobiens tels que des ions d'argent, des éléments tels que le zinc et/ou le cuivre et/ou la poudre d'aloès et/ou le jus d'aloès et/ou le gel d'aloès et/ou tout composé à base d'aloès, ou un mélange desdits additifs.

11. Procédé selon la revendication 9 ou 10, dans lequel ladite étape d'application dudit revêtement antiadhésif (20) comprend un ou plusieurs des procédés suivants: pulvérisation, roulage, revêtement au rideau par une machine de revêtement au rideau, sérigraphie, tampographie, brossage ou autre procédé d'application équivalent.

12. Procédé selon l'une quelconque des revendications 9 à 11, comprenant au moins une étape de fixation de manches ou de poignées (10) et similaires par soudage, par exemple au moyen d'un bloc, ou par rivetage, ou par d'autres techniques de liaison équivalentes.

13. Procédé selon la revendication précédente, comprenant une étape de préparation d'un revêtement ou d'une peinture (15) pour lesdits manches ou poignées (10), l'ajout à une base aqueuse, ou à une base solvant, d'additifs antimicrobiens tels que des ions d'argent, des éléments tels que le zinc et/ou le cuivre et/ou la poudre d'aloès et/ou le jus d'aloès et/ou le gel d'aloès et/ou tout composé d'aloès, ou un mélange desdits additifs.

14. Procédé selon la revendication précédente, comprenant une étape d'application d'un revêtement antimicrobien ou d'une peinture antimicrobienne (15) sur le manche ou la poignée (10) par un ou plusieurs des procédés suivants: sérigraphie, tampographie, pulvérisation, roulage, brossage, par immersion ou par une autre méthode d'application équivalente.
